# EUROPEAN PATENT APPLICATION

(11) **EP 4 810 278 A1**
(43) Date of publication of application: **23.09.2026**
(21) Application number: 24890014.4
(22) Date of filing: 17.05.2024
(51) Int. Cl.: B60H 1/00, F25B 40/06

(54) **VEHICLE THERMAL MANAGEMENT SYSTEM AND VEHICLE HAVING SAME**

(30) Priority: 17.11.2023 CN 202323129778 U
(71) Applicant: BYD Company Limited, Shenzhen, Guangdong 518118 (CN)
(72) Inventor: GAO, Shanling, Shenzhen, Guangdong 518118 (CN); ZHANG, Jingke, Shenzhen, Guangdong 518118 (CN); YANG, Erbao, Shenzhen, Guangdong 518118 (CN); ZHOU, Yongquan, Shenzhen, Guangdong 518118 (CN); CAI, Chuanming, Shenzhen, Guangdong 518118 (CN)
(74) Representative: Mathys & Squire
(86) International application number: PCT/CN2024/093951
(87) International publication number: WO 2025/102643

(57) **Abstract**

A thermal management system for a vehicle and a vehicle having the thermal management system are provided. The thermal management system includes: an air conditioning subsystem, a first refrigerant branch, and a heat regeneration apparatus. The air conditioning subsystem includes a compressor and a first heat exchange branch. The first heat exchange branch is separately connected to a discharge port and a suction port of the compressor, and the first heat exchange branch is configured to adjust a temperature of a vehicle cabin. The first refrigerant branch is separately connected to the discharge port and the suction port, and is suitable for adjusting a temperature in a storage compartment. The heat regeneration apparatus is separately connected to the first refrigerant branch and the suction port, and the heat regeneration apparatus is constructed to be configured to heat at least refrigerant flowing from the first refrigerant branch to the suction port.

## Description

### CROSS-REFERENCE TO RELATED APPLICATIONS

This application claims priority to Chinese Patent Application No. 2023231297786, filed on November 17, 2023 and entitled "THERMAL MANAGEMENT SYSTEM FOR VEHICLE AND VEHICLE HAVING THERMAL MANAGEMENT SYSTEM", which is incorporated herein by reference in its entirety.

### TECHNICAL FIELD

This application relates to the field of vehicles, and in particular, to a thermal management system for a vehicle and a vehicle having the thermal management system.

### BACKGROUND

In related technologies, a refrigeration system of a vehicle and a thermal management system of the vehicle are two independent systems. When the refrigeration system is integrated into the thermal management system, most of the liquid refrigerant is not vaporized due to the limited refrigeration demand of the refrigeration system, resulting in excessive liquid refrigerant in the thermal management system. This poses a risk of liquid slugging in a compressor by the liquid refrigerant.

### SUMMARY

This application is intended to resolve at least one of technical problems in the conventional technologies. Therefore, an objective of this application is to provide a thermal management system for a vehicle. The thermal management system is provided with a heat regeneration apparatus to heat liquid refrigerant into gaseous refrigerant, thereby avoiding occurrence of the liquid slugging problem.

This application further provides a vehicle having the thermal management system.

The thermal management system according to this application is used for a vehicle. The vehicle is provided with a storage compartment, and the thermal management system includes: an air conditioning subsystem, the air conditioning subsystem including a compressor and a first heat exchange branch, the first heat exchange branch being separately connected to a discharge port and a suction port of the compressor, and the first heat exchange branch being configured to adjust a temperature of a vehicle cabin; a first refrigerant branch, the first refrigerant branch being separately connected to the discharge port and the suction port and being suitable for adjusting a temperature in the storage compartment; and a heat regeneration apparatus, the heat regeneration apparatus being separately connected to the first refrigerant branch and the suction port, and the heat regeneration apparatus being constructed to be configured to heat at least refrigerant flowing from the first refrigerant branch to the suction port.

The thermal management system according to this application is provided with the heat regeneration apparatus between the first refrigerant branch and the suction port of the compressor, to raise a temperature of liquid refrigerant and vaporize the liquid refrigerant, thereby avoiding a problem of liquid slugging of the compressor caused by excessive liquid refrigerant and preventing the compressor from being damaged.

The vehicle according to this application includes the thermal management system according to any one of the foregoing embodiments.

The vehicle according to this application is provided with the thermal management system in the foregoing embodiments. Therefore, the vehicle operates more reliably.

Some of additional aspects and advantages of this application are provided in the following descriptions, and some of the additional aspects and the advantages become apparent from the following descriptions or are learned from practice of this application.

### BRIEF DESCRIPTION OF DRAWINGS

FIG. 1 is a flow circuit diagram of a thermal management system according to some embodiments of this application;
FIG. 2 is a flow circuit diagram of a thermal management system according to some embodiments of this application;
FIG. 3 is a flow circuit diagram of a thermal management system according to some other embodiments of this application;
FIG. 4 is a flow circuit diagram of a thermal management system according to some other embodiments of this application;
FIG. 5 is a flow circuit diagram of a thermal management system according to some other embodiments of this application;
FIG. 6 is a flow circuit diagram of a thermal management system according to some other embodiments of this application;
FIG. 7 is a flow circuit diagram of a thermal management system according to some other embodiments of this application;
FIG. 8 is a flow circuit diagram of a thermal management system according to some other embodiments of this application;
FIG. 9 is a schematic diagram of a structure of a heat regeneration apparatus according to some embodiments of this application; and
FIG. 10 is a schematic diagram of a structure of a vehicle according to some embodiments of this application.

### Reference numerals:

1000: Vehicle;
100: Thermal management system; 200: Storage compartment;
10: Storage compartment heat exchange system; 11: Energy accumulation member; 12a: First refrigerant branch; 13: Second heat exchanger; 14: Sterilization module; 15: Fan;
20: Battery pack heat exchange system; 21: Heat exchange member; 22: Fourth electronic expansion valve; 23: Third temperature sensor; 24: Third pressure and temperature sensor;
30: Vehicle cabin heat exchange system; 31: Compressor; 31a: Suction port; 31b: Discharge port; 32a: First heat exchange branch; 33: First heat exchanger; 34: Internal condenser; 35: Internal evaporator;
40: Heat regeneration apparatus; 41: Bypass line 42: Connecting tube; 43: Accumulator; 43a: Liquid inlet; 43b: Vapor outlet; 44: Second heating member;
50a: Coolant circuit; 51: Third heat exchanger; 52: Electronic control module;
61: First pressure sensor; 62: First temperature sensor; 63: Second temperature sensor; 64: First pressure and temperature sensor; 65: Second pressure and temperature sensor;
71: First solenoid valve; 72: Second solenoid valve; 73: Third solenoid valve; 74: Fourth solenoid valve;
81: First one-way valve; 82: Second one-way valve; 83: Third one-way valve; 84: Fourth one-way valve;
91: First electronic expansion valve; 92: First throttle valve; 93: Second electronic expansion valve; 94: Third electronic expansion valve; 95: Second throttle valve.

### DESCRIPTION OF EMBODIMENTS

The following describes in detail embodiments of this application, and examples of the embodiments are shown in the accompanying drawings. Same or similar reference numerals throughout the accompanying drawings indicate same or similar elements or elements having same or similar functions. The following embodiments described with reference to the accompanying drawings are exemplary and are merely intended to explain this application, but will not be understood as a limitation on this application.

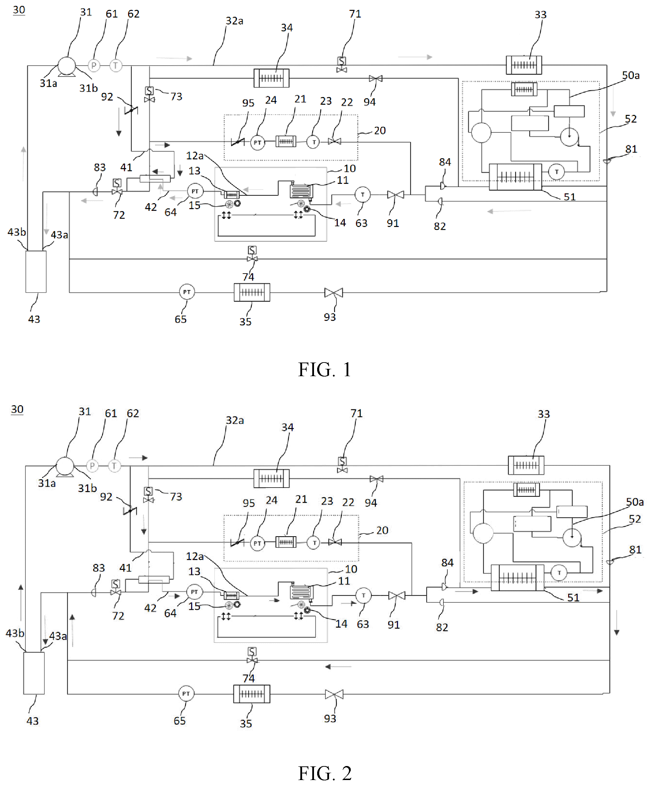

The following describes a thermal management system 100 for a vehicle according an embodiment of this application with reference to FIG. 1 to FIG. 10.

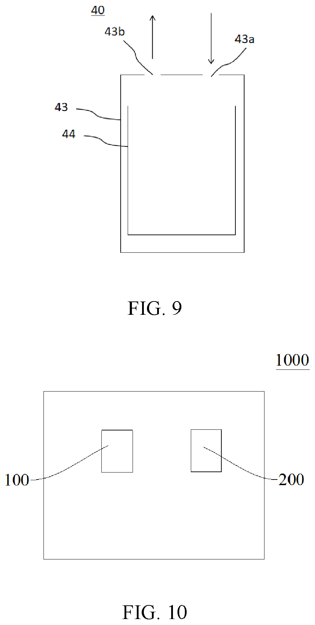

As shown in FIG. 10, the thermal management system 100 according to this application is used for a vehicle 1000, and the vehicle 1000 has a storage compartment 200. As shown in FIG. 1 to FIG. 8, the thermal management system 100 includes an air conditioning subsystem, a first refrigerant branch 12a, and a heat regeneration apparatus 40. The air conditioning subsystem includes a compressor 31 and a first heat exchange branch 32a. The first heat exchange branch 32a is separately connected to a discharge port 31b and a suction port 31a of the compressor 31, and the first heat exchange branch 32a is configured to adjust a temperature of a vehicle cabin. The first refrigerant branch 12a is separately connected to the discharge port 31b and the suction port 31a, and is configured to adjust a temperature in the storage compartment 200. The heat regeneration apparatus 40 is separately connected to the first refrigerant branch 12a and the suction port 31a, and the heat regeneration apparatus 40 is constructed to be configured to heat at least refrigerant flowing from the first refrigerant branch 12a to the suction port 31a.

In some embodiments, the vehicle 1000 has at least the storage compartment 200 and the thermal management system 100. The storage compartment 200 may perform heating, cooling, temperature maintenance, and another function on an item placed inside the storage compartment 200. The storage compartment 200 may be a vehicle-mounted refrigerator for storing food, beverages, and the like, and the temperature in the storage compartment 200 is adjusted by the first refrigerant branch 12a to preserve freshness of the food stored in the storage compartment 200. The thermal management system 100 includes at least the air conditioning subsystem, the first refrigerant branch 12a, and the heat regeneration apparatus 40. The first heat exchange branch 32a of the air conditioning subsystem may communicate with a heat exchange structure inside the vehicle cabin, so that the thermal management system 100 can be configured to adjust the temperature in the vehicle cabin. The compressor 31 has the suction port 31a and the discharge port 31b. The compressor 31 usually discharges refrigerant through the discharge port 31b. After passing sequentially through the heat exchange structures in the thermal management system 100, the refrigerant returns to the compressor 31 through the suction port 31a, thereby adjusting the temperature of the vehicle cabin by using the air conditioning subsystem. The first refrigerant branch 12a is separately connected to the discharge port 31b and the suction port 31a of the compressor 31, so that the refrigerant discharged from the discharge port 31b of the compressor 31 can flow through the first refrigerant branch 12a, thereby enabling the first refrigerant branch 12a to adjust the temperature in the storage compartment 200.

In some embodiments, the heat regeneration apparatus 40 of the thermal management system 100 is separately connected to the first refrigerant branch 12a and the suction port 31a of the compressor 31. In this case, the heat regeneration apparatus 40 is disposed upstream of the suction port 31a of the compressor 31 and the heat regeneration apparatus 40 can heat refrigerant to vaporize the liquid refrigerant. When a temperature of liquid refrigerant flowing in the first refrigerant branch 12a is relatively low, the heat regeneration apparatus 40 heats the liquid refrigerant to raise a temperature of the refrigerant and vaporize the refrigerant. By heating the liquid refrigerant to convert the refrigerant from a liquid state to a gaseous state, the compressor 31 is prevented from being subjected to liquid slugging by the liquid refrigerant, thereby avoiding occurrence of a liquid slugging problem and preventing the compressor 31 from being damaged.

The thermal management system 100 according to this application is provided with the heat regeneration apparatus 40 between the first refrigerant branch 12a and the suction port 31a of the compressor 31, so as to raise the temperature of the liquid refrigerant and vaporize the liquid refrigerant, thereby avoiding a problem of liquid slugging of the compressor 31 caused by excessive liquid refrigerant and preventing the compressor 31 from being damaged.

In some embodiments, the heat regeneration apparatus 40 may be a coaxial tube recuperator, or may be an accumulator with a heating function. This is not limited herein.

In some embodiments, an internal condenser 34 or an internal evaporator 35 may be disposed in the first heat exchange branch 32a to perform heat exchange with air in the vehicle cabin, thereby adjusting the temperature of the vehicle cabin.

According to some embodiments of this application, as shown in FIG. 1 to FIG. 8, the thermal management system 100 further includes a first heat exchanger 33, and the first heat exchanger 33 is separately connected to the discharge port 31b and a first end of the first refrigerant branch 12a. The heat regeneration apparatus 40 includes a first heating member and a connecting tube 42. The first heating member is configured to heat the connecting tube 42, and the connecting tube 42 is connected between a second end of the first refrigerant branch 12a and the suction port 31a. In some embodiments, the first heat exchanger 33 may be disposed outside the vehicle 1000. The first heat exchanger 33 may be an external condenser. Refrigerant flows through the first heat exchanger 33 and enters the first refrigerant branch 12a. The refrigerant exchanges, in the first refrigerant branch 12a, heat with air in the storage compartment 200. Then, the refrigerant flows into the connecting tube 42 through the first refrigerant branch 12a. The first heating member heats the connecting tube 42, which raises a temperature of the refrigerant flowing through the connecting tube 42 to vaporize the liquid refrigerant, thereby preventing the compressor 31 from being subjected to liquid slugging by the liquid refrigerant.

According to some embodiments of this application, as shown in FIG. 1 and FIG. 2, the first heating member is a bypass line 41 connected to the suction port 31a and the discharge port 31b. The bypass line 41 exchanges heat with the connecting tube 42 to raise the temperature of the refrigerant in the connecting tube 42 and vaporize the liquid refrigerant. The first heating member is designed as the bypass line 41 suitable for exchanging heat with the connecting tube 42, so that a method in which the bypass line 41 heats the refrigerant in the connecting tube 42 can be implemented in an easier way, and a piping structure within the thermal management system 100 is easily arranged. Specifically, the bypass line 41 can use refrigerant discharged from the compressor 31 to exchange heat with the refrigerant flowing through the connecting tube 42, thereby changing the temperature of the refrigerant in the connecting tube 42.

In some embodiments, the first heating member may alternatively be a heating wire or another structure suitable for heating the refrigerant in the connecting tube 42.

According to some embodiments of this application, as shown in FIG. 1 and FIG. 2, at least a part of the bypass line 41 is sleeved on the connecting tube 42. In this case, refrigerant flowing through the at least a part of the bypass line 41 can surround and envelop an outer periphery of the connecting tube 42 to facilitate sufficient heat exchange between the bypass line 41 and the connecting tube 42, thereby ensuring a heat exchange effect between the bypass line 41 and the connecting tube 42.

In some embodiments, an outer surface of at least a part of the bypass line 41 is attached to an outer surface of the connecting tube 42, so that the bypass line 41 exchanges heat with the connecting tube 42.

According to some embodiments of this application, as shown in FIG. 9, the heat regeneration apparatus 40 includes an accumulator 43 and a second heating member 44. The accumulator 43 has a liquid inlet 43a and a vapor outlet 43b. The liquid inlet 43a is connected to the first refrigerant branch 12a, and the vapor outlet 43b is connected to the suction port 31a. The second heating member 44 is disposed in the accumulator 43 and is configured to heat the accumulator 43. The accumulator 43 separately communicates the first refrigerant branch 12a and the suction port 31a of the compressor 31. In some embodiments, the second heating member 44 may be disposed inside the accumulator 43 or outside the accumulator 43 to heat refrigerant flowing through the accumulator 43. Alternatively, the second heating member 44 and the accumulator 43 are two independent structures, and the second heating member 44 may heat the refrigerant before the refrigerant flows into the accumulator 43 or after the refrigerant flows out from the accumulator 43.

In some embodiments, the heat regeneration apparatus 40 may include the first heating member, the connecting tube 42, the accumulator 43, and the second heating member 44. The first heating member and the connecting tube 42 may preliminarily heat refrigerant flowing from the first refrigerant branch 12a. The accumulator 43 and the second heating member 44 may be disposed downstream of the connecting tube 42 to reheat the refrigerant, thereby ensuring a heating effect of the heat regeneration apparatus 40 on the refrigerant. Unevaporated liquid refrigerant is further heated to be fully vaporized, so that the compressor 31 is prevented from being subjected to liquid slugging by the liquid refrigerant.

According to some embodiments of this application, as shown in FIG. 9, the second heating member 44 is a heating film disposed on an inner wall of the accumulator 43. In some embodiments, the heating film is disposed around the inner wall of the accumulator 43 to be suitable for raising a temperature of refrigerant flowing toward the compressor 31.

In some embodiments, the second heating member 44 may alternatively be a heating wire or a coaxial tube thermal radiation structure.

According to some embodiments of this application, as shown in FIG. 1 to FIG. 8, the thermal management system 100 further includes a second heat exchanger 13. The second heat exchanger 13 is connected to the first refrigerant branch 12a in series and is suitable for adjusting the temperature in the storage compartment 200. The second heat exchanger 13 is suitable for performing heat exchange between the storage compartment 200 and the first refrigerant branch 12a, thereby using the thermal management system 100 in the vehicle to control the temperature of the storage compartment 200.

According to some embodiments of this application, as shown in FIG. 1 to FIG. 8, the thermal management system further includes an energy accumulation member 11. The energy accumulation member 11 is disposed in the first refrigerant branch 12a, and the first refrigerant branch 12a provides energy for the energy accumulation member 11. The energy accumulation member 11 is constructed to store and release energy to adjust the temperature in the storage compartment 200. Specifically, the first refrigerant branch 12a may exchange heat with the energy accumulation member 11 to provide energy for the energy accumulation member 11, thereby enabling the energy accumulation member 11 to recover and store cooling capacity from the first refrigerant branch 12a. When the compressor 31 does not work, the energy accumulation member 11 releases the stored energy to maintain the temperature of the storage compartment 200, thereby reducing frequent starts of the compressor 31. This helps lower overall vehicle energy consumption and is conducive to improving driving range of the vehicle.

According to some embodiments of this application, as shown in FIG. 1 to FIG. 8, the first refrigerant branch 12a passes through the energy accumulation member 11, so that the first refrigerant branch 12a can be integrated within the energy accumulation member 11. A design of reducing external pipelines facilitates improvement of integrated design and size reduction. Additionally, the energy accumulation member 11 may further protect the first refrigerant branch 12a to some extent. In addition, the first refrigerant branch 12a passes through the energy accumulation member 11, so that a contact area between the first refrigerant branch 12a and the energy accumulation member 11 can be increased, thereby increasing a heat exchange area therebetween. This further enables sufficient heat exchange between the first refrigerant branch 12a and the energy accumulation member 11, so that heat exchange efficiency therebetween is improved, that is, energy storage efficiency of the energy accumulation member 11 is improved.

According to some embodiments of this application, as shown in FIG. 1 to FIG. 8, the thermal management system 100 further includes a sterilization module 14. The sterilization module 14 is configured to at least perform sterilization on the energy accumulation member 11, and the sterilization module 14 may also perform disinfection and sterilization on the storage compartment 200. This prevents the growth of bacteria and mold within the storage compartment 200, thereby avoiding unpleasant odors and ensuring food safety.

In some embodiments, the sterilization module 14 is constructed as an ultraviolet sterilization lamp. The ultraviolet sterilization lamp is located outside the storage compartment 200 and is suitable for directing light into the storage compartment 200 to perform sterilization and disinfection.

According to some embodiments of this application, as shown in FIG. 1 to FIG. 8, the thermal management system 100 further includes a heat exchange member 21. The heat exchange member 21 is suitable for performing heat exchange with a battery pack. The heat exchange member 21 is connected to the first refrigerant branch 12a in parallel. Providing the heat exchange member 21 enables the thermal management system 100 to have a function of adjusting a temperature of the battery pack, and a part of the structures in the thermal management system 100 are used to implement thermal management of a battery. In addition, the heat exchange member 21 is connected to the first refrigerant branch 12a in parallel, which can reduce arrangement difficulty of the heat exchange member 21.

In some embodiments, the heat exchange member 21 may be constructed as a battery pack cold plate. The battery pack cold plate is integrated within the battery pack and is suitable for heating or cooling the battery pack. The heat exchange member 21 is connected to the first refrigerant branch 12a in parallel, so that the battery pack cold plate can be integrated within the thermal management system 100. In this way, the battery pack cold plate can use the compressor 31 and another structure in the thermal management system 100 to implement heat exchange with the battery.

In some embodiments of this application, there are a plurality of heat exchange members 21, and the plurality of heat exchange members 21 are connected in parallel. A quantity of heat exchange members 21 may be selected based on an actual requirement. The plurality of heat exchange members 21 are connected in parallel, so that the arrangement difficulty of the plurality of first heat exchange members 21 is reduced. In addition, the plurality of heat exchange members 21 connected in parallel may be used to exchange heat with a plurality of batteries, thereby improving heat exchange efficiency between the thermal management system 100 and the battery. In addition, when the battery pack is cooled, liquid refrigerant flowing out from the heat exchange member 21 may also be heated by the heat regeneration apparatus 40, thereby effectively avoiding a risk of liquid slugging of the compressor 31.

In some embodiments of this application, as shown in FIG. 1 to FIG. 8, the thermal management system 100 further includes a third heat exchanger 51. The third heat exchanger 51 is separately connected to the first end of the first refrigerant branch 12a and the discharge port 31b, and the second end of the first refrigerant branch 12a is connected to the suction port 31a. The thermal management system 100 further includes a coolant circuit 50a for dissipating heat from an electronic control module 52. The third heat exchanger 51 is disposed in the coolant circuit 50a to enable heat exchange between coolant in the coolant circuit 50a and refrigerant. The third heat exchanger 51 is suitable for exchanging heat with the electronic control module 52, thereby enabling the thermal management system 100 to dissipate heat from or heat the electronic control module 52.

In some embodiments of this application, as shown in FIG. 1 to FIG. 8, the thermal management system 100 of the vehicle includes a plurality of heat exchange systems, such as a storage compartment heat exchange system 10, a battery pack heat exchange system 20, and a vehicle cabin heat exchange system 30. A plurality of subsystems share the compressor 31 in the vehicle cabin heat exchange system 30. In other words, the plurality of heat exchange systems share the compressor 31 in the air conditioning subsystem. The vehicle cabin heat exchange system 30 has the first heat exchange branch 32a. The first heat exchange branch 32a is provided with the internal condenser 34 and the internal evaporator 35 located inside the vehicle cabin. Refrigerant discharged from the discharge port 31b of the compressor 31 may flow through the first heat exchange branch 32a or through the first refrigerant branch 12a. When the refrigerant flows through the first refrigerant branch 12a, the first refrigerant branch 12a exchanges heat with the energy accumulation member 11 to provide energy to the energy accumulation member 11, thereby enabling the energy accumulation member 11 to recover and store cooling capacity from the first refrigerant branch 12a. The energy accumulation member 11 can optionally release the stored energy to maintain the temperature of the storage compartment 200. The first refrigerant branch 12a may be applicable to the storage compartment heat exchange system 10, and the heat exchange member 21 in the battery pack heat exchange system 20 may be connected to the first refrigerant branch 12a in parallel. The thermal management system 100 is further provided with structural components such as a throttle valve, a solenoid valve, a one-way valve, a two-way electronic expansion valve, a temperature sensor, a pressure sensor, and a temperature and pressure sensor. These structural components deliver refrigerant to any heat exchange system requiring temperature adjustment to implement temperature control of the heat exchange system.

To prevent liquid slugging of the compressor 31 by the refrigerant after the refrigerant condenses into a liquid state during heat exchange, the heat regeneration apparatus 40 is disposed between the first refrigerant branch 12a and the suction port 31a. The heat regeneration apparatus 40 may be a heating film disposed in the accumulator 43 to raise the temperature of the refrigerant entering the compressor 31. Alternatively, the heat regeneration apparatus 40 may be the bypass line 41 connected to the suction port 31a and the discharge port 31b, and the connecting tube 42 disposed between the first refrigerant branch 12a and the suction port 31a, with at least a part of the bypass line 41 being sleeved on the connecting tube 42. In this case, refrigerant flowing through the at least a part of the bypass line 41 surrounds and envelops the outer periphery of the connecting tube 42, thereby enabling sufficient heat exchange between the bypass line 41 and the connecting tube 42 and ensuring a heat exchange effect between the bypass line 41 and the connecting tube 42. The heat regeneration apparatus 40 may alternatively be a combination of the foregoing two configurations. Details are not described herein again.

When the heat regeneration apparatus 40 is constructed to be the heating film disposed in the accumulator 43, operating conditions of the thermal management system 100 may be described by using the following embodiments.

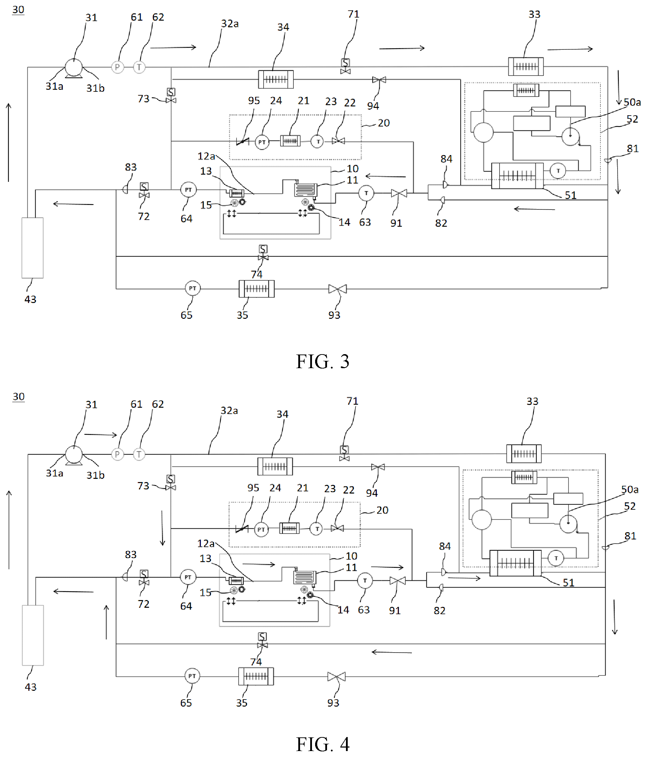

As shown in FIG. 3, during refrigeration and temperature maintenance of only the storage compartment heat exchange system 10, a refrigerant flow path is as follows: Compressor 31 → First pressure sensor 61 → First temperature sensor 62 → First solenoid valve 71 → First heat exchanger 33 → First one-way valve 81 → Second one-way valve 82 → First electronic expansion valve 91 → Second temperature sensor 63 → Energy accumulation member 11 → Second heat exchanger 13 → First pressure and temperature sensor 64 → Second solenoid valve 72 → Third one-way valve 83 → Accumulator 43 → Compressor 31.

In this circulation circuit, high-temperature and high-pressure gaseous refrigerant generated by the compressor 31 exchanges heat with outside cold air through the first heat exchanger 33, that is, the external condenser, thereby condensing into medium-temperature and medium-pressure liquid refrigerant. The medium-temperature and medium-pressure liquid refrigerant expands into low-temperature and low-pressure liquid refrigerant through the first electronic expansion valve 91. The low-temperature and low-pressure liquid refrigerant flows through the energy accumulation member 11, with cooling capacity being absorbed by the energy accumulation member 11, then flows through the second heat exchanger 13, that is, an evaporator of the storage compartment heat exchange system 10, and exchanges heat with warm air inside the storage compartment 200, thereby implementing refrigeration of the storage compartment heat exchange system 10. After the energy accumulation member 11 is fully charged with cooling capacity, the compressor 31 does not work. The cooling capacity is released from the energy accumulation member 11. A fan 15 is disposed in the storage compartment 200. In this case, the fan 15 is turned on to enable air circulation, so that refrigeration and temperature maintenance performance of the storage compartment heat exchange system 10 can be met.

As shown in FIG. 4, during heating and temperature maintenance of only the storage compartment heat exchange system 10, the refrigerant flow path is as follows: Compressor 31 → First pressure sensor 61 → First temperature sensor 62 → Third solenoid valve 73 → First pressure and temperature sensor 64 → Second heat exchanger 13 → Energy accumulation member 11 → Second temperature sensor 63 → First electronic expansion valve 91 → Fourth one-way valve 84 → Third heat exchanger 51 → Fourth solenoid valve 74 → Accumulator 43 → Compressor 31.

In this circulation circuit, high-temperature and high-pressure gaseous refrigerant generated by the compressor 31 flows through the second heat exchanger 13 and exchanges heat with cold air in the storage compartment heat exchange system 10, thereby heating the storage compartment 200. The refrigerant then flows through the energy accumulation member 11, and the energy accumulation member 11 absorbs excess heat. When the energy accumulation member 11 is fully charged, the compressor 31 may stop working, and the energy accumulation member 11 provides a heat source for temperature maintenance.

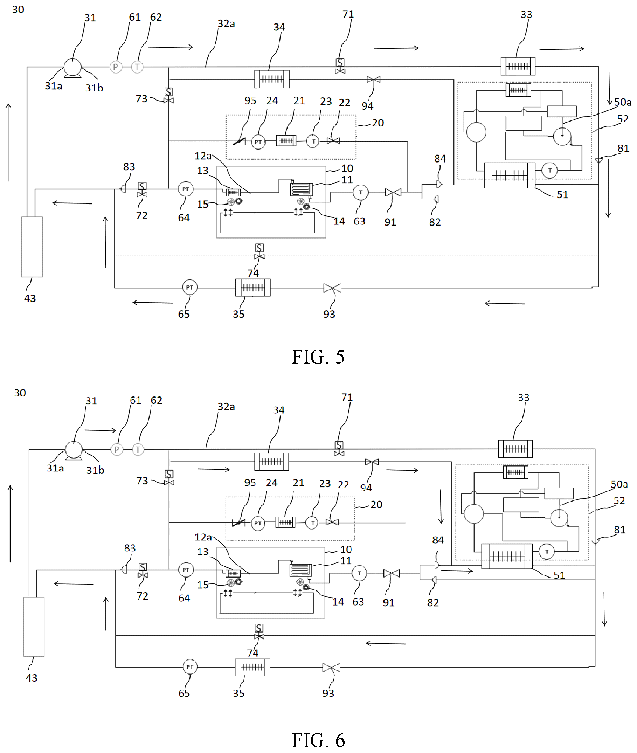

As shown in FIG. 5, during refrigeration of the vehicle cabin heat exchange system 30, the refrigerant flow path is as follows: Compressor 31 → First pressure sensor 61 → First temperature sensor 62 → First solenoid valve 71 → First heat exchanger 33 → First one-way valve 81 → Second electronic expansion valve 93 → Internal evaporator 35 → Second pressure and temperature sensor 65 → Accumulator 5 → Compressor 31.

In this circulation circuit, high-temperature and high-pressure gaseous refrigerant generated by the compressor 31 exchanges heat with outside cold air through the first heat exchanger 33, thereby condensing into medium-temperature and medium-pressure liquid refrigerant. The medium-temperature and medium-pressure liquid refrigerant expands into low-temperature and low-pressure liquid refrigerant through the second electronic expansion valve 93. The low-temperature and low-pressure liquid refrigerant flows through the internal evaporator 35 and exchanges heat with warm air in the vehicle cabin, thereby implementing refrigeration of the vehicle cabin.

As shown in FIG. 6, during heating of the vehicle cabin heat exchange system 30, the refrigerant flow path is as follows: Compressor 31 → First pressure sensor 61 → First temperature sensor 62 → Internal condenser 34 → Third electronic expansion valve 94 → Third heat exchanger 51 → Fourth solenoid valve 74 → Accumulator 43 → Compressor 31.

In this circulation circuit, high-temperature and high-pressure gaseous refrigerant generated by the compressor 31 passes through the internal condenser 34 to exchange heat with cold air in the vehicle cabin, thereby implementing heating of the vehicle cabin.

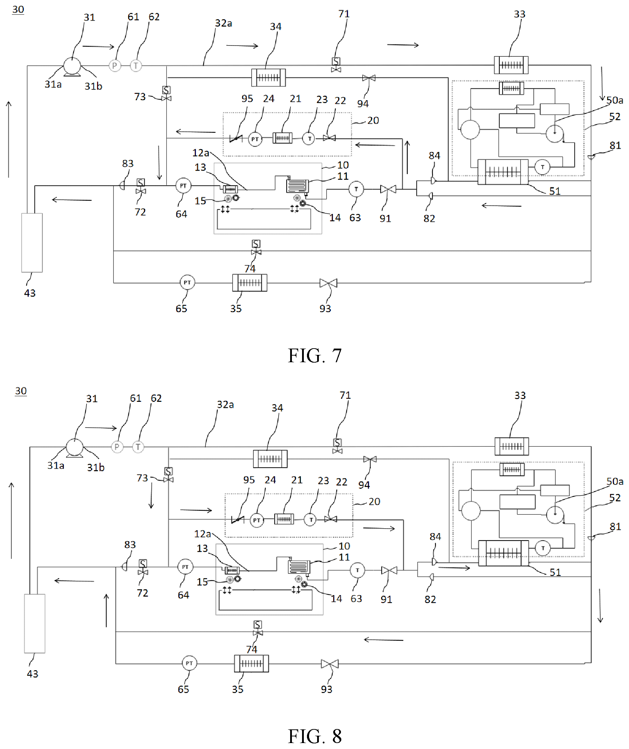

As shown in FIG. 7, during cooling of the battery pack heat exchange system 20, the refrigerant flow path is as follows: Compressor 31 → First pressure sensor 61 → First temperature sensor 62 → First solenoid valve 71 → First heat exchanger 33 → First one-way valve 81 → Second one-way valve 82 → Fourth electronic expansion valve 22 → Third temperature sensor 23 → Heat exchange member 21 → Third pressure and temperature sensor 24 → Second solenoid valve 72 → Third one-way valve 83 → Accumulator 43 → Compressor 31.

In this circulation circuit, high-temperature and high-pressure gaseous refrigerant generated by the compressor 31 exchanges heat with outside cold air through the first heat exchanger 33, thereby condensing into medium-temperature and medium-pressure liquid refrigerant. The medium-temperature and medium-pressure liquid refrigerant expands into low-temperature and low-pressure liquid refrigerant through the fourth electronic expansion valve 22. The low-temperature and low-pressure liquid refrigerant flows through the heat exchange member 21 and exchanges heat with the battery pack, thereby implementing cooling of the battery.

As shown in FIG. 8, during heating of the battery pack heat exchange system 20, the refrigerant flow path is as follows: Compressor 31 → First pressure sensor 61 → First temperature sensor 62 → Third solenoid valve 73 → Second throttle valve 95 → Third pressure and temperature sensor 24 → Heat exchange member 21 → Third temperature sensor 23 → Fourth electronic expansion valve 22 → Fourth one-way valve 84 → Third heat exchanger 51 → Fourth solenoid valve 74 → Accumulator 43 → Compressor 31.

In the cycle circuit, when high-temperature and high-pressure gaseous refrigerant generated by the compressor 31 flows through the heat exchange member 21, the refrigerant exchanges heat with the low-temperature battery pack, thereby implementing heating of the battery pack.

The foregoing six operating conditions can be used in any combination, and a refrigerant multi-way valve may be added for control in some combined operating conditions.

When the heat regeneration apparatus 40 includes the bypass line 41 and the connecting tube 42, the operating conditions of the thermal management system 100 may be described by using the following embodiments.

As shown in FIG. 1, during refrigeration and temperature maintenance of only the storage compartment heat exchange system 10, the refrigerant flow path is as follows: Compressor 31 → First pressure sensor 61 → First temperature sensor 62 → First solenoid valve 71 → First heat exchanger 33 → First one-way valve 81 → Second one-way valve 82 → First electronic expansion valve 91 → Second temperature sensor 63 → Energy accumulation member 11 → Second heat exchanger 13 → First pressure and temperature sensor 64. Then the refrigerant flows into the high-temperature bypass line 41 through the low-temperature connecting tube 42 (while the first throttle valve 92 is open). After heat exchange between the refrigerant in the two pipelines, the refrigerant in the two pipelines flows out and merges, and a subsequent flow path is as follows: Second solenoid valve 72 → Third one-way valve 83 → Accumulator 43 → Compressor 31.

In this circulation circuit, high-temperature and high-pressure gaseous refrigerant generated by the compressor 31 exchanges heat with outside cold air through the first heat exchanger 33, that is, the external condenser, thereby condensing into medium-temperature and medium-pressure liquid refrigerant. The medium-temperature and medium-pressure liquid refrigerant expands into low-temperature and low-pressure liquid refrigerant through the first electronic expansion valve 91. The low-temperature and low-pressure liquid refrigerant flows through the energy accumulation member 11, with cooling capacity being absorbed by the energy accumulation member 11, then flows through the second heat exchanger 13, that is, the evaporator of the storage compartment heat exchange system 10, and exchanges heat with warm air inside the storage compartment 200, thereby implementing refrigeration of the storage compartment heat exchange system 10. After the energy accumulation member 11 is fully charged with cooling capacity, the compressor 31 does not work. The cooling capacity is released from the energy accumulation member 11. The fan 15 is disposed in the storage compartment 200. In this case, the fan 15 is turned on to enable air circulation, so that refrigeration and temperature maintenance performance of the storage compartment heat exchange system 10 can be met.

As shown in FIG. 2, during heating and temperature maintenance of only the storage compartment heat exchange system 10, the refrigerant flow path is as follows: Compressor 31 → First pressure sensor 61 → First temperature sensor 62 → Third solenoid valve 73 → First pressure and temperature sensor 64. Then the refrigerant flows out from the low-temperature connecting tube 42 (while the first throttle valve 92 is closed), and a subsequent flow path is as follows: Second heat exchanger 13 → Energy accumulation member 11 → Second temperature sensor 63 → First electronic expansion valve 91 → Fourth one-way valve 84 → Third heat exchanger 51 → Fourth solenoid valve 74 → Accumulator 43 → Compressor 31.

In this circulation circuit, high-temperature and high-pressure gaseous refrigerant generated by the compressor 31 flows through the second heat exchanger 13 and exchanges heat with cold air in the storage compartment heat exchange system 10, thereby heating the storage compartment 200. The refrigerant then flows through the energy accumulation member 11, and the energy accumulation member 11 absorbs excess heat. When the energy accumulation member 11 is fully charged, the compressor 31 may stop working, and the energy accumulation member 11 provides a heat source for temperature maintenance.

The following briefly describes the vehicle 1000 according to this application.

As shown in FIG. 10, the vehicle 1000 according to this application includes the thermal management system 100 according to any one of the foregoing embodiments. Because the vehicle 1000 according to this application is provided with the thermal management system 100 in the foregoing embodiments, the vehicle 1000 operates more reliably.

In the description of this specification, descriptions referring to the terms such as "one embodiment", "some embodiments", "example embodiments", "examples", "specific examples", or "some examples" mean that specific features, structures, materials, or characteristics described with reference to this embodiment or example are included in at least one embodiment or example of this application. In this specification, illustrative expressions of the foregoing terms do not necessarily refer to a same embodiment or example. Furthermore, the described specific features, structures, materials, or characteristics may be combined in any one or more embodiments or examples in a suitable manner.

Although embodiments of this application have been shown and described, a person of ordinary skill in the art will understand that various changes, modifications, replacements, and variations may be made to these embodiments without departing from the principles and objectives of this application, and the scope of this application is defined by the claims and equivalents thereof.

## Claims

1. A thermal management system (100) for a vehicle, wherein the vehicle has a storage compartment (200), and the thermal management system (100) comprises:
an air conditioning subsystem, the air conditioning subsystem comprising a compressor (31) and a first heat exchange branch (32a), the first heat exchange branch (32a) being separately connected to a discharge port (31b) and a suction port (31a) of the compressor (31), and the first heat exchange branch (32a) being configured to adjust a temperature of a vehicle cabin;
a first refrigerant branch (12a), the first refrigerant branch (12a) being separately connected to the discharge port (31b) and the suction port (31a) and being suitable for adjusting a temperature in the storage compartment (200); and
a heat regeneration apparatus (40), the heat regeneration apparatus (40) being separately connected to the first refrigerant branch (12a) and the suction port (31a), and the heat regeneration apparatus (40) being constructed to be configured to heat at least refrigerant flowing from the first refrigerant branch (12a) to the suction port (31a).

2. The thermal management system (100) for a vehicle according to claim 1, further comprising a first heat exchanger (33), the first heat exchanger (33) being separately connected to the discharge port (31b) and a first end of the first refrigerant branch (12a); and
the heat regeneration apparatus (40) comprising a first heating member and a connecting tube (42), the first heating member being configured to heat the connecting tube (42), and the connecting tube (42) being connected between a second end of the first refrigerant branch (12a) and the suction port (31a).

3. The thermal management system (100) for a vehicle according to claim 2, wherein the first heating member is a bypass line (41) connected to the suction port (31a) and the discharge port (31b).

4. The thermal management system (100) for a vehicle according to claim 3, wherein at least a part of the bypass line (41) is sleeved on the connecting tube (42).

5. The thermal management system (100) for a vehicle according to any one of claims 1 to 4, wherein the heat regeneration apparatus (40) comprises:
an accumulator (43), the accumulator (43) having a liquid inlet (43a) and a vapor outlet (43b), the liquid inlet (43a) being connected to the first refrigerant branch (12a), and the vapor outlet (43b) being connected to the suction port (31a); and
a second heating member (44), the second heating member (44) being disposed in the accumulator (43) and being configured to heat the accumulator (43).

6. The thermal management system (100) for a vehicle according to claim 5, wherein the second heating member (44) is a heating film disposed on an inner wall of the accumulator (43).

7. The thermal management system (100) for a vehicle according to any one of claims 1 to 6, further comprising a second heat exchanger (13), the second heat exchanger (13) being connected to the first refrigerant branch (12a) in series and being suitable for adjusting the temperature in the storage compartment (200).

8. The thermal management system (100) for a vehicle according to any one of claims 1 to 7, further comprising an energy accumulation member (11), the energy accumulation member (11) being disposed in the first refrigerant branch (12a), the first refrigerant branch (12a) providing energy for the energy accumulation member (11), and the energy accumulation member (11) being constructed to store and release energy to adjust the temperature in the storage compartment (200).

9. The thermal management system (100) for a vehicle according to claim 8, wherein the first refrigerant branch (12a) passes through the energy accumulation member (11).

10. The thermal management system (100) for a vehicle according to claim 8 or 9, further comprising a sterilization module (14), the sterilization module (14) being configured to at least perform sterilization on the energy accumulation member (11).

11. The thermal management system (100) for a vehicle according to any one of claims 1 to 10, further comprising a heat exchange member (21), the heat exchange member (21) being suitable for performing heat exchange with a battery pack, and the heat exchange member (21) being connected to the first refrigerant branch (12a) in parallel;
a third heat exchanger (51), the third heat exchanger (51) being separately connected to the first end of the first refrigerant branch (12a) and the discharge port (31b), and the second end of the first refrigerant branch (12a) being connected to the suction port (31a); and
a coolant circuit (50a), the coolant circuit (50a) being configured to dissipate heat from an electronic control module (52), the third heat exchanger (51) being disposed in the coolant circuit (50a) to enable heat exchange between coolant in the coolant circuit (50a) and refrigerant.

12. A vehicle, comprising the thermal management system (100) according to any one of claims 1 to 11.
